# EUROPEAN PATENT APPLICATION

(11) **EP 3 766 931 A1**
(43) Date of publication of application: **20.01.2021**
(21) Application number: 19186369.5
(22) Date of filing: 15.07.2019
(51) Int. Cl.: C08L 23/08

(54) **AN ACOUSTIC DAMPING MATERIAL AND USE THEREOF**

(71) Applicant: SIKA TECHNOLOGY AG, 6340 Baar (CH)
(72) Inventor: Kornacki, Zdislaw, 61130 Nidderau (DE); Schwab, Frederick, 60594 Frankfurt (DE); Hardt, Christian, 65451 Kelsterbach (DE); Slabe, Andreja, 65936 Frankfurt (DE)
(74) Representative: Sika Patent Attorneys

(57) **Abstract**

The invention is directed to a bitumen-free acoustic damping material comprising at least one thermoplastic polymer, at least one hydrocarbon resin, and at least one solid particulate filler. The acoustic damping material is suitable for use in damping of undesired vibrations and noise in mechanical structures and components of manufactured articles. The invention is also directed to use of the acoustic damping material for damping of vibrations and noise in transportation vehicles and white goods, to a vibration and noise damping element comprising a damping layer composed of the acoustic damping material, to a method for applying a vibration and noise damping element to a noise emitting surface of a substrate, and to a vibration damped system comprising a substrate and the vibration and noise damping element bonded to a noise emitting surface of the substrate.

## Description

### Technical field

The present invention relates to compositions used for damping of vibrations and noise in mechanical structures of manufactured articles. In particular, the present invention relates to bitumen free compositions, which are suitable for use in damping of vibrations of components and structures contained in articles of automotive industry, home appliances, and general industry.

### Background of the invention

Acoustic damping materials are widely used in automotive, home appliance and general industries for reducing of undesired vibrations, structure borne noise, and air borne noise. For example, in automotive vehicles, it is desirable to prevent transfer of vibrations generated by the motors, pumps, gears and other dynamic force generators through the body of the vehicle into the passenger compartment. Structure borne noise is produced when the vibrations generated by a dynamic force generator are transmitted through a supporting structure, typically a frame or other hollow structure, to a noise emitting surface, such as a metallic or plastic panel, which transforms the mechanical vibrations into sound waves. Structure borne noise and vibrations in general can be effectively reduced by application of vibration damping materials directly to the structures and surfaces of components subjected to vibrational disturbances, such as surfaces of vehicle panels, floors, and shells of machines, washers, and dryers.

Acoustic damping materials used for damping of vibrations of panels and plates are commonly provided in form of pre-formed single- and multi-layer damping elements or as liquid compositions, which are applied directly on surface of a substrate. Damping materials designed for damping of vibrations and noise in hollow structures such as cavities are usually provided in form of cavity filler inserts comprising an expandable composition and one or more attaching members, which are capable of holding the cavity filler insert in a desired position within the hollow structure.

Pre-formed single- and multiple-layer damping elements comprise a damping layer, which is in direct contact with a surface of the substrate to be damped against vibrational disturbances. The damping layer is capable of dissipating kinetic energy of the vibrating surface into heat energy through extension and compression of the material of the damping layer. Widely used materials for damping layers include bitumen- and rubber-based compositions comprising relatively high amounts of particulate fillers and varying amount of additives, in particular plasticizers, rheology modifiers, and drying agents. Pre-formed single- and multiple-layer damping elements often comprise a layer of an adhesive composition, such as a pressure sensitive adhesive (PSA) or a hot-melt adhesive, to enable bonding of the damping layer to a surface of a substrate, such as a panel or floor of an automotive vehicle. Liquid applied damping systems are typically thermally drying, gelling, or reactive compositions, which are applied on the surface of the substrate in liquid state, for example by spraying.

Acoustic damping materials used for damping of vibrations of panels and plates can also be provided in form of constrained layer damping elements, which contain damping layer and a stiff outer layer that "constraints" the damping layer thereby sandwiching it between the stiff outer layer and the surface of the substrate to be damped. The stiffness of the outer layer is generally a factor of ten times higher than the stiffness of the layer of damping material. Commonly used materials for the outer top layer include, for example, aluminum and fiber glass fabrics. Constrained layer dampers are typically more effective in damping of undesired vibrations than single-layer damping elements but they are also more expensive to produce.

Cavity filler inserts are used for dampening of air borne noise within the cavity of a hollow structure component and to prevent vibrations from being transmitted through the walls of the cavity. A cavity filler insert typically consists of a damping material and at least one attachment member capable of holding the cavity filler insert in a desired position within the hollow structure. The damping material of the cavity filler insert is typically formulated as an expandable composition, which upon activation, such as at elevated temperature, expands and forms a seal around the interior surface of the wall of the cavity. Expandable damping materials suitable for damping of air borne noise within a cavity are commonly referred to as "acoustic baffles".

Bitumen-based compositions have been widely used as acoustic damping materials in the automotive and home appliance industry, since these are low cost materials with high vibration damping properties as well as reliable and easily controllable physical properties. In the home appliance market, bitumen based damping systems currently have almost 100 % market share. Highly filled bitumen compositions have been in particular used for providing sound proofing coverings and anti-drumming coatings, which are applied to metal and plastic components in assembly processes of automotive vehicles and household appliances. According to a conventional procedure, a mixture of bitumen and fillers is first extruded and/or calendered to form films, from which suitable shaped parts suitable for use as damping elements are prepared by punch or die cutting. The damping elements are then bonded to the metal or plastic sheet to be damped. It is also possible that the shaped part is further adapted to the shape of the metal or plastic sheet by heating.

One of the main application areas of acoustic damping elements includes the interior of automotive vehicles and washing machines in home appliances. In these applications, the acoustic damping materials are subjected to strict regulations regarding emissions of organic compounds and of odor. In the automotive industry, the quality of the components used in automotive vehicles is controlled by VDA regulations. The maximum amounts of emissions of high and medium volatility organic compounds from non-metallic materials are defined in VDA regulations as "VOC and FOG limits". Bitumen is per-se not an ideal material for use in automotive and white good applications since it is known to have a characteristic odor. Furthermore, it's VOC and FOG emissions are near the limits of accepted values.

There is thus a need for a novel type of acoustic damping material, which is free of bitumen and which provides similar or improved vibration and noise damping properties compared to the State-of-the-Art bitumen-based damping materials. The bitumen-free acoustic damping material should ideally also exhibit hardness, fogging, and stiffness properties, which are comparable to those of prior art bitumen-based acoustic damping materials.

### Summary of the invention

The object of the present invention is to provide a material for use in damping of undesired vibrations and noise in mechanical structures and components of manufactured articles, which material also has reduced emissions of high and medium volatile organic compounds (VOC and FOG) compared to State-of-the-Art bitumen-based acoustic damping materials.

The subject of the present invention is an acoustic damping material as defined in claim 1.

It was surprisingly found out that a highly filled thermoplastic polymer composition, which comprises a thermoplastic polymer component, a solid particulate filler component, and at least one hydrocarbon resin exhibits similar or even improved vibration and noise damping properties compared to commercially available bitumen-based acoustic damping materials. In particular, it was found out that the acoustic damping material of the present invention exhibits a high vibration damping performance as defined by the loss factor over a wide range of temperatures, which makes it especially suitable for use in damping of vibrations and noise of structures and components of automotive vehicles.

One of the advantages of the acoustic damping material of the present invention is that due to the absence of bitumen, the material exhibits very low emissions of high and medium volatile organic compounds and it is also practically odorless. The acoustic damping material of the present invention is, therefore, especially suitable for use in automotive interior applications and in home appliance applications, such as in washers and dryers.

Another advantage of the acoustic damping material of the present invention is that it exhibits a high loss factor over a wide range of temperatures, such as between -30°C and 60°C, which is especially desirable in automotive applications. In particular, it has been found out that the acoustic damping material of the present invention provides a higher maximum value for the loss factor and broader temperature range for loss factors over 0.1 compared to commercially available bitumen-based acoustic damping materials. Furthermore, the acoustic damping material of the present invention can be easily processed into shaped articles by using conventional polymer processing techniques such as molding, calendaring, and extrusion techniques.

Other subjects of the present invention are presented in other independent claims. Preferred aspects of the invention are presented in the dependent claims.

### Brief description of the Drawings

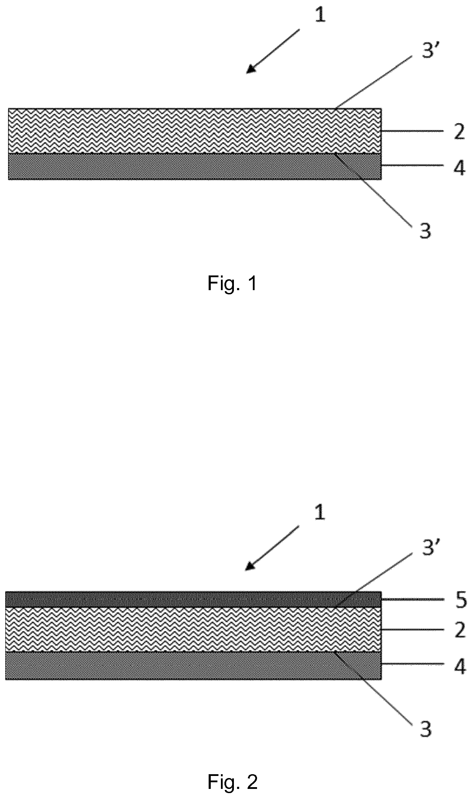

Fig. 1 shows a cross-section of a vibration and noise damping element (1) comprising a damping layer (2) having a first surface (3) and a second surface (3'), and an adhesive layer (4) covering the first surface (3) of the damping layer (2).
Fig. 2 shows a cross-section of a vibration and noise damping element (1) comprising a damping layer (2) having a first (3) surface and a second surface (3'), an adhesive layer (4) covering the first surface (3) of the damping layer (2), and a constraining layer (5) covering the second surface (3') of the damping layer (2).

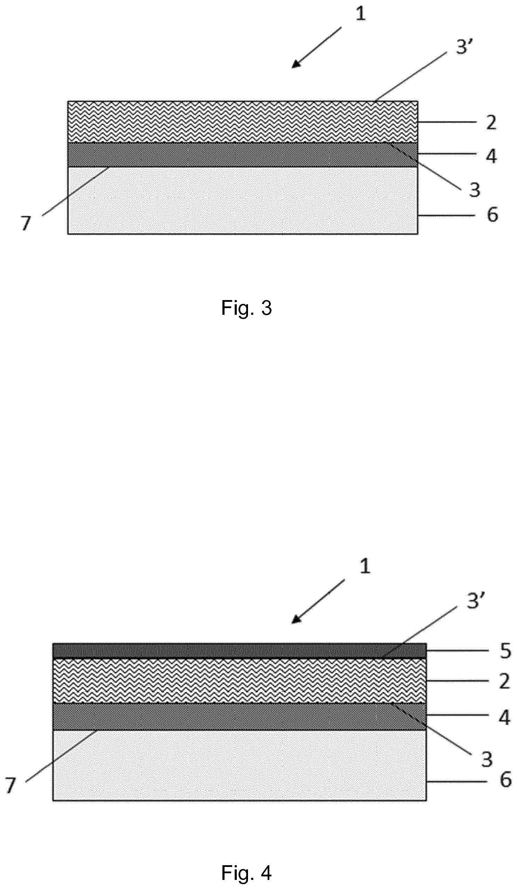

Fig. 3 shows a cross-section of a vibration damped system comprising a substrate (6) having a noise emitting surface (7) and a vibration and noise damping element (1) comprising a damping layer (2) and an adhesive layer (4), wherein the first surface (3) of the damping layer (2) is adhesively bonded to the noise emitting surface (7) via the adhesive layer (4).
Fig. 4 shows a cross-section of a vibration damped system comprising a substrate (6) having a noise emitting surface (7) and a vibration and noise damping element (1) comprising a damping layer (2), an adhesive layer (4), and a constraining layer (5), wherein the first surface (3) of the damping layer (2) is adhesively bonded to the noise emitting surface (7) via the adhesive layer (4) and wherein the damping layer (2) is sandwiched between the adhesive layer (4) and the constraining layer (5).

### Detailed description of the invention

The subject of the present invention is an acoustic damping material comprising:
a) At least one thermoplastic polymer **P**,
b) At least one hydrocarbon resin **HR**,
c) At least one solid particulate filler **F**,
d) Optionally at least one plasticizer **PL**, and
e) Optionally at least one paraffin wax **PW**, wherein the at least one solid particulate filler **F** comprises at least 35 wt.-%, preferably at least 40 wt.-% of the total weight of the acoustic damping material.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "a-olefin" designates an alkene having the molecular formula CₓH2ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "thermoplastic" refers to any material which can be melted and resolidified with little or no change in physical properties.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and tetrahydrofurane as a solvent, at a temperature of 35°C.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1%.

The term "softening point" refers to a temperature at which compound softens in a rubber-like state, or a temperature at which the crystalline portion within the compound melts. The softening point can be determined by Ring and Ball measurement conducted according to DIN EN 1238 standard.

The term "melting temperature" refers to a temperature at which a material undergoes transition from the solid to the liquid state. The melting temperature (Tₘ) is preferably determined by differential scanning calorimetry (DSC) according to ISO 11357 standard using a heating rate of 2°C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The "amount or content of at least one component X" in a composition, for example "the amount of the at least one thermoplastic polymer P" refers to the sum of the individual amounts of all thermoplastic polymers P contained in the composition. For example, in case the composition comprises 20 wt.-% of at least one thermoplastic polymer P, the sum of the amounts of all thermoplastic polymers P contained in the composition equals 20 wt.-%.

The term "room temperature" designates a temperature of 23°C.

The acoustic damping material of the present invention is especially suitable for use in damping of undesired vibrations and noise in mechanical structures components of a manufactured article, such as an automotive vehicle or a product of home appliance or general industry. In these applications, the acoustic damping material, typically provided in form of a shaped article, such as a layer or pad, is applied directly on a surface a mechanical structure or component, which is subjected to vibrational disturbances. The acoustic damping material can be brought to a form of a suitably shaped article by using conventional extrusion and/or calendaring or hot-pressing techniques. The type and amount of the components a) to e) of the acoustic damping material can be optimized such that that the efficiency of the material in dissipating kinetic energy of the vibrating surface into heat energy through extension and compression of the damping material is maximized in the application relevant temperature range.

The acoustic damping material of the present invention is preferably essentially free of bitumen. The expression "essentially free" is understood to mean that the acoustic damping may contain only traces of bitumen, such as less than 0.5 wt.-%, preferably less than 0.25 wt.-%, more preferably less than 0.1 wt.-%, still more preferably less than 0.01 wt.-%, based on the total weight of the acoustic damping material. The term "bitumen" designates in the present disclosure blends of heavy hydrocarbons, having a solid consistency at room temperature. These are normally obtained as vacuum residue from refinery processes, which can be distillation (topping or vacuum) and/or conversion processes, such as thermal cracking and visbreaking, of suitable crude oils. Furthermore, the term "bitumen" also designates natural and synthetic bitumen as well as bituminous materials obtained from the extraction of tars and bituminous sands.

Furthermore, it may be preferably that the acoustic damping material is substantially free of cross-linking/curing agents, such as free-radical cross-linking agents, for example peroxides. The phrase "substantially free" is intended to mean that if an amount of a cross-linking agent is found in the acoustic damping material, said amount is so negligible that the effect of the cross-linking agent cannot be obtained. In other words, the amount of a cross-linking agent found in the acoustic damping material cannot initiate curing of the polymeric components, in particular curing of the at least one thermoplastic polymer **P**, or can initiate only a substantially negligible amount of cross-linking. According to one or more embodiments, the acoustic damping material contains less than 0.15 wt.-%, preferably less than 0.1 wt.-%, more preferably less than 0.01 wt.-%, even more preferably 0 wt.-% of cross-linking/curing agents.

The at least one thermoplastic polymer **P**, the at least one hydrocarbon resin **HR**, and the at least one plasticizer **PL** and the at least one paraffin wax **PW**, if present in the acoustic damping material, form a binder matrix for the solid particulate compounds contained in the acoustic damping material, in particular for the at least one solid particulate filler **F**. The portion of the binder matrix in the acoustic damping material is not particularly restricted but its amount should be high enough to enable efficient binding of the solid particulate compounds and to prevent formation of interconnected solid networks of the solid particulate compounds. According to one or more embodiments, the sum of the amounts of components a) + b) + d) + e), i.e. the sum of the amounts of the at least one thermoplastic polymer **P**, the at least one hydrocarbon resin **HR**, and the at least one plasticizer **PL** and the at least one paraffin wax **PW**, if present, comprises 15 - 65 wt.-%, preferably 20 - 60 wt.-%, more preferably 20 - 55 wt.-%, even more preferably 25 - 50, most preferably 25 - 45 wt.-% of the total weight of the acoustic damping material.

The first part of the binder matrix of the acoustic damping material is composed of the at least one thermoplastic polymer **P**. The amount of the at least one thermoplastic polymer **P** is not particularly restricted. However, it may be advantageous that the amount of the at least one thermoplastic polymer **P** is at least 1.5 wt.-%, such as at least 2.5 wt.-%, based on the total weight of the acoustic damping material. The use of such amounts of thermoplastic polymers **P** have been found out to enable easy processing of the acoustic damping material into shaped articles by using conventional thermoplastic processing methods, such as extrusion, calendering, injection molding, and hot-pressing techniques. According to one or more embodiments, the at least one thermoplastic polymer **P** comprises not more than 25 wt.-%, in particular not more than 20 wt.-%, preferably 1.5 - 20 wt.-%, more preferably 3 - 15 wt.-%, even more preferably 3.5 - 12.5 wt.-%, still more preferably 5 - 12.5 wt.-% of the total weight of the acoustic damping material.

The type of the at least one thermoplastic polymer **P** is preferably selected such that the temperature range at which the maximum vibration damping effect of the acoustic damping material occurs coincides with the range of temperatures to which the surface of a substrate to be damped against vibrations is subjected during its use. Since the ability of polymers to dissipate vibrations to heat energy is at maximum when the polymer is in a transition state between the hard/glassy and soft/rubbery state, preferred thermoplastic polymers **P** to be used in the acoustic damping material have a glass transition temperature (T_{g}) falling within the intended range of application temperatures. For example, in case the acoustic damping material is used for damping of vibrations and noise in structures of automotive vehicles, the application temperatures typically range from -40°C to 60°C, in particular from -35°C to 50°C. On the other hand, preferred thermoplastic polymers **P** to be used in the acoustic damping material have a softening point (Tₛ) and/or a melting temperature (Tₘ) above the maximum application temperature of the acoustic damping material.

According to one or more embodiments, the at least one thermoplastic polymer **P** has:
- a glass transition temperature (T_{g}) determined by dynamical mechanical analysis (DMA) as the peak of the measured loss modulus (G") curve using an applied frequency of 1 Hz and a strain level of 0.1% of below 25°C, preferably below 5°C, more preferably below 0°C and/or
- a softening point (Tₛ) determined by Ring and Ball measurement conducted according to DIN EN 1238 standard of above 35°C, preferably above 45°C, more preferably above 55°C, such as in the range of 35 - 250°C, preferably 45 - 200°C, more preferably 55 - 180°C.

The type of the at least one thermoplastic polymer **P** is not particularly restricted. Various types of thermoplastic polymers, including crystalline, semicrystalline, and amorphous polymers and thermoplastic elastomers are suitable for use as the at least one thermoplastic polymer **P**. Suitable thermoplastic polymers **P** include, in particular, polyolefin homopolymers and copolymers, copolymers of ethylene with vinyl acetate, and thermoplastic olefin elastomers (TPE-O).

Suitable polyolefin homopolymers and copolymers include, for example, ethylene homopolymers, ethylene-α-olefin copolymers, propylene homopolymers, and propylene-α-olefin copolymers.

Suitable ethylene-α-olefin copolymers include, for example, ethylene-α-olefin random and block copolymers of ethylene and one or more C₃-C₂₀ α-olefin monomers, in particular one or more of propylene, 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of ethylene-derived units, based on the total weight of the copolymer.

Suitable propylene-α-olefin copolymers include propylene-ethylene random copolymers and propylene-α-olefin random and block copolymers of propylene and one or more C₄-C₂₀ α-olefin monomers, in particular one or more of 1-butene, 1-pentene, 1-hexene, 1- heptene, 1-octene, 1-decene, 1-dodecene, and 1-hexadodecene, preferably comprising at least 50 wt.-%, more preferably at least 60 wt.-% of propylene-derived units, based on the total weight of the copolymer.

Suitable copolymers of ethylene and vinyl acetate include those having a content of a structural unit derived from vinyl acetate in the range of 4 - 90 wt.-%, in particular 4 - 80 wt.-%, based on the total weight of the copolymer. Suitable copolymers of ethylene and vinyl acetate are commercially available, for example, under the trade name of Escorene® (from Exxon Mobil), under the trade name of Primeva® (from Repsol Quimica S.A.), and under the trade name of Evatane® (from Arkema Functional Polyolefins).

Suitable ethylene-α-olefin copolymers include, for example, ethylene-based polyolefin elastomers (POE), which are commercially available, for example, under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage® 8414 (all from Dow Chemical Company).

Other suitable ethylene-α-olefin copolymers include, for example, ethylene-based plastomers, which are commercially available, for example, under the trade name of Affinity®, such as Affinity® EG 8100G, Affinity® EG 8200G, Affinity® SL 8110G, Affinity® KC 8852G, Affinity® VP 8770G, and Affinity® PF 1140G (all from Dow Chemical Company) and under the trade name of Exact®, such as Exact® 3024, Exact® 3027, Exact® 3128, Exact® 3131, Exact® 4049, Exact® 4053, Exact® 5371, and Exact® 8203 (all from Exxon Mobil).

Further suitable ethylene-α-olefin copolymers include ethylene-α-olefin block copolymers, such as ethylene-based olefin block copolymers (OBC), which are commercially available, for example, under the trade name of Infuse®, such as Infuse® 9100, Infuse® 9107, Infuse® 9500, Infuse® 9507, and Infuse® 9530 (all from Dow Chemical Company).

Suitable propylene-α-olefin copolymers include, for example, propylene based elastomers (PBE) and propylene-based plastomers (PBP), which are commercially available, for example, under the trade name of Versify® (from Dow Chemical Company) and under the trade name of Vistamaxx® (from Exxon Mobil).

Further suitable polyolefin homopolymers and copolymers include at 25°C solid amorphous poly-α-olefins. These are commercially available, for example, under the trade name of Vestoplast® (from Evonik Industries), under the trade name of Eastoflex® (from Eastman Corporation), and under the trade name of REXtac® (from REXtac LLC).

Thermoplastic olefin elastomers (TPE-O), which are also known as thermoplastic polyolefins (TPO), are also suitable for use as the at least one thermoplastic polymer **P**. TPOs are heterophase polyolefin compositions containing a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs" or "in-situ impact copolymers (ICP)", as well as physical blends of the aforementioned components. In case of a reactor-blend type of TPO, the components are typically produced in a sequential polymerization process, wherein the components of the matrix phase are produced in a first reactor and transferred to a second reactor, where the components of the dispersed phase are produced and incorporated as domains in the matrix phase. A physical-blend type of TPO is produced by melt-mixing the base polyolefin with the polyolefin modifier each of which was separately formed prior to blending of the components.

Reactor-blend type TPOs comprising polypropylene as the base polymer are often referred to as "heterophasic propylene copolymers" whereas reactor-blend type TPOs comprising polypropylene random copolymer as the base polymer are often referred to as "heterophasic random propylene copolymers". Depending on the amount of the polyolefin modifier, the commercially available heterophasic polypropylene copolymers are typically characterized as polypropylene "in-situ impact copolymers" (ICP) or as "reactor-TPOs" or as "soft-TPOs". The main difference between these types of TPOs is that the amount of the polyolefin modifier is typically lower in ICPs than in reactor-TPOs and soft-TPOs, such as not more than 40 wt.-%, in particular not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable TPOs are commercially available, for example, under the trade name Hifax®, Adflex® and Adsyl® (all from Lyondell Basell), such as Hifax® CA 10A, Hifax® CA 12A, and Hifax® CA 212 A and under the trade name of Borsoft® (from Borealis Polymers), such as Borsoft® SD233 CF.

In acoustic damping applications it is generally desirable to maximize the broadness of the range of temperatures at which the vibration and noise damping effect of the damping material is at maximum, in particular the range of temperatures at which the measured loss factor of the damping material has a value of above 0.1. Since the maximum vibration damping effect of thermoplastic polymers typically occurs at a narrow range of temperatures, i.e. when the polymer is in its transition state, it may be preferred that the acoustic damping material comprises at least two different thermoplastic polymers having different glass transition temperatures (T_{g}) as the at least one thermoplastic polymer **P**.

It can furthermore be advantageous that the at least two different thermoplastic polymers are not entirely miscible with each other and/or that the at least two different thermoplastic polymers can be mixed with each other to form a semi-compatible polymer blend containing micro-incompatible phases. By the polymers being "entirely miscible" with each other is meant that a polymer blend composed of the at least two thermoplastic polymers has a negative Gibbs free energy and heat of mixing. The polymer blends composed of entirely miscible polymers tend to have one single glass transition temperature (T_{g}) as measured by using dynamic mechanical analysis (DMA).

According to one or more embodiments, the at least one thermoplastic polymer **P** comprises:
a1) At least one hard thermoplastic polymer **P1**, preferably at least one hard ethylene vinyl acetate copolymer, having a melt flow index (MFI) determined according to ISO 1133 (190°C/2.16 kg) of not more than 50 g/10 min, preferably not more than 35 g/10 min, more preferably not more than 25 g/10 min, even more preferably not more than 15 g/10 min, still more preferably not more than 10 g/10 min and/or having a glass transition temperature (T_{g}) determined by dynamical mechanical analysis (DMA) as the peak of the measured loss modulus (G") curve using an applied frequency of 1 Hz and a strain level of 0.1% of below 5°C, preferably below 0°C, more preferably below -10°C, even more preferably below -20°C and/or
a2) At least one soft thermoplastic polymer **P2**, preferably at least one soft ethylene vinyl acetate copolymer, having a melt flow index (MFI) determined according to ISO 1133 (190°C/2.16 kg) of at least 75 g/10 min, preferably at least 100 g/10 min, more preferably at least 150 g/10 min, even more preferably at least 200 g/10 min, most preferably at least 250 g/10 min and/or having a glass transition temperature (T_{g}) determined by dynamical mechanical analysis (DMA) as the peak of the measured loss modulus (G") curve using an applied frequency of 1 Hz and a strain level of 0.1% of below 5°C, preferably below -0°C, more preferably below -10°C, even more preferably below -20°C.

The expression "the at least one thermoplastic polymer **P** comprises at least one thermoplastic polymer **P1"** is understood to mean that the acoustic damping material comprises one or more thermoplastic polymers **P1** as representative(s) of the at least one thermoplastic polymer **P**.

According to one or more embodiments, the at least one thermoplastic polymer **P** further comprises:
a3) At least one polyolefin **P3**, wherein the at least one polyolefin **P3** is preferably not entirely miscible with the at least one hard thermoplastic polymer **P1** and/or with the at least one soft thermoplastic polymer **P2**.

According to one or more embodiments, the at least one thermoplastic polymer **P** comprises the at least one hard thermoplastic polymer **P1** and the least one polyolefin **P3**.

According to one or more embodiments, the at least one thermoplastic polymer **P** comprises the at least one soft thermoplastic polymer **P2** and the least one polyolefin **P3**.

According to one or more further embodiments, the at least one thermoplastic polymer **P** comprises the at least one hard thermoplastic polymer **P1**, the at least one soft thermoplastic polymer **P2**, and the least one polyolefin **P3**.

According to one or more embodiments, the at least one hard thermoplastic polymer **P1** is an ethylene vinyl acetate copolymer having a content of a structural unit derived from vinyl acetate of not more than 20 wt.-%, preferably not more than 15 wt.-%, based on the total weight of the copolymer and/or the at least one soft thermoplastic polymer **P2** is an ethylene vinyl acetate copolymer having a content of a structural unit derived from vinyl acetate of at least 15 wt.-%, preferably at least 20 wt.-%, based on the total weight of the copolymer.

According to one or more embodiments, the at least one hard thermoplastic polymer **P1** comprises at least 5 wt.-%, preferably 10 - 35 wt.-% of the total weight of the at least one thermoplastic polymer **P** and/or the at least one soft thermoplastic polymer **P2** comprises at least 10 wt.-%, preferably 15 - 45 wt.-% of the total weight of the at least one thermoplastic polymer **P** and/or the at least one polyolefin **P3** comprises at least 25 wt.-%, preferably 30 - 75 wt.-% of the total weight of the at least one thermoplastic polymer **P**.

The type of the at least one polyolefin **P3** is not particularly restricted in the present invention. Preferably, the at least one polyolefin **P3** is not entirely miscible with the at least one hard thermoplastic polymer **P1** and/or the at least one soft thermoplastic polymer **P2**. It may furthermore be preferred that the at least one polyolefin **P3** can be mixed with the at least one hard thermoplastic polymer **P1** and/or with the at least one soft thermoplastic polymer **P2** to form a semi-compatible polymer blend containing micro-incompatible phases.

According to one or more embodiments, the at least one polyolefin **P3** is selected from the group consisting of at 25°C solid poly-α-olefins and propylene-based elastomers.

Suitable at 25°C solid poly-α-olefins to be used as the at least one polyolefin **P3** include, for example, homopolymers, copolymers, and terpolymers of monomers selected from the group consisting of ethylene, propylene, 1-butene and higher α-olefins. Especially suitable at 25°C solid poly-α-olefins include homopolymers of propylene, copolymers of propylene and ethylene, copolymers of propylene and 1-butene or other higher α-olefins, homopolymers of ethylene, copolymers of ethylene and propylene, copolymers of ethylene and 1-butene or other higher α-olefins, and terpolymers of ethylene, propylene, and 1-butene.

According to one or more embodiments, the at least one polyolefin **P3** comprises at least one propylene-based elastomer **P31**, preferably having:
- a melting temperature (Tₘ) as determined by DSC according to ISO 11357 standard of not more than 110°C, preferably not more than 105°C, more preferably not more than 100°C and/or
- an average molecular weight (Mₙ) in the range of 10'000 - 250'000 g/mol, preferably 25'000 - 200'000 g/mol and/or
- a melt flow index measured according to ASTM D1238 (230°C/2.16 kg) of 2 - 30 g/10 min, preferably 2 - 20 g/10 min.

Suitable propylene-based elastomers include, in particular, copolymers of propylene and at least one comonomer selected from the group consisting of ethylene and C₄-C₁₀ α-olefins, wherein the copolymer comprises at least 65 wt.-%, preferably at least 70 wt.-% propylene-derived units, based on the total weight of the copolymer and 1 - 35 wt.-%, preferably 5 - 25 wt.-% units derived from at least one of ethylene or a C₄-C₁₀ α-olefin, based on the total weight of the copolymer.

According to one or more embodiments, the at least one propylene-based elastomer **P31** is a copolymer of propylene and ethylene comprising 80 - 90 wt.-% of propylene-derived units, based on the total weight of the propylene-based elastomer and 9 - 18 wt.-% of ethylene-derived units based on the total weight of the propylene-based elastomer.

According to one or more embodiments, the at least one propylene-based elastomer **P31** has:
- a Vicat softening point determined according to ASTM 1525 standard using a weight of 200 g of equal or less than 95°C, preferably equal or less than 85°C, more preferably equal or less than 75°C and/or
- a heat of fusion as determined by DSC of not more than 80 J/g, preferably not more than 70 J/g, more preferably not more than 50 J/g and/or
- a percent crystallinity as determined by DSC procedure of 0.5 - 40%, preferably 1 - 30% of that of isotactic polypropylene.

Regarding the determination of the percent crystallinity of the propylene-based elastomer, the heat of fusion of isotactic polypropylene (100% crystallinity) is estimated at 189 J/g.

Suitable propylene-based elastomers are commercially available, for example, under the trade name of Vistamaxx® (from Exxon Mobil) and under the trade name of Versify® (from Dow Chemical Company).

According to one or more embodiments, the at least one polyolefin **P3** comprises at least one at 25°C solid amorphous poly-α-olefin **P32**, preferably having:
- a softening point (Tₛ) determined by using the Ring and Ball method as defined in DIN EN 1238 standard in the range of 60 - 200°C, preferably 75 - 180°C, more preferably 85 - 180°C and/or
- an average molecular weight (Mₙ) in the range of 2'500 - 35'000 g/mol, preferably 3'000 - 30'000 g/mol, more preferably 5'000 - 25'000 g/mol and/or
- a melt viscosity at 190°C determined according to DIN 53019 standard of not more than 150'000 MPa·s, preferably not more than 135'000 MPa·s, more preferably not more than 125'000 MPa·s.

The term "amorphous poly-α-olefin" designates in the present disclosure poly-α-olefins having a low crystallinity degree determined by a differential scanning calorimetry (DSC) measurements, such as in the range of 0.001 - 10 wt.-%, preferably 0.001 - 5 wt.-%. The crystallinity degree of a polymer can be determined by using DSC measurements to determine the heat of fusion of the polymer, from which the degree of crystallinity is calculated. In particular, the term "amorphous poly-α-olefin" designates poly-α-olefins lacking a crystalline melting temperature (Tₘ) as determined by DSC or equivalent technique.

According to one or more embodiments, the at least one at 25°C solid amorphous poly-α-olefin **P32** has a xylene cold soluble content (XCS) determined at 25°C according ISO 16152-2005 standard of at least 80 wt.-%, preferably at least 90 wt.-%, more preferably at least 95 wt.-% and/or a heat of fusion (Hf) as determined by DSC measurements of not more than 35 J/g, preferably not more than 30 J/g, more preferably not more than 25 J/g. Examples of suitable at 25°C solid amorphous poly-α-olefins include amorphous atactic polypropylene, amorphous propene rich propylene-α-olefin copolymers and terpolymers, in particular amorphous propylene-ethylene copolymers, amorphous propylene-butene copolymers, amorphous propylene-hexene copolymers, and amorphous propylene-ethylene-butene terpolymers. Such amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

Suitable at 25°C solid amorphous poly-α-olefins are commercially available, for example, under the trade name of Vestoplast® (from Evonik Industries), under the trade name of Eastoflex® (from Eastman Corporation), and under the trade name of REXtac® (from REXtac LLC).

According to one or more further embodiments, the at least one polyolefin **P3** consists of the at least one propylene-based elastomer **P31**. According to one or more embodiment, the at least one polyolefin **P3** consists of the at least one at 25°C solid amorphous poly-α-olefin **P32.** According to one or more further embodiments, the at least one polyolefin **P3** comprises the at least one propylene-based elastomer **P31** and the at least one at 25°C solid amorphous poly-α-olefin **P32**.

The binder matrix of the acoustic damping material further comprises at least one hydrocarbon resin **HR.**

The term "hydrocarbon resin" designates in the present document synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Examples of suitable hydrocarbon resins **HR** include C5 aliphatic resins, mixed C5/C9 aliphatic/aromatic resins, aromatic modified C5 aliphatic resins, cycloaliphatic resins, mixed C5 aliphatic/cycloaliphatic resins, mixed C9 aromatic/cycloaliphatic resins, mixed C5 aliphatic/cycloaliphatic/C9 aromatic resins, aromatic modified cycloaliphatic resins, C9 aromatic resins, as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50%, 70%, or 90%.

The type of the at least one hydrocarbon resin **HR** is not particularly restricted in the present invention. The selection of the at least one hydrocarbon resin **HR** depends, at least partially, on the type of the other components contained in the binder matrix of the acoustic damping material, in particular of the type of the at least one thermoplastic polymer **P**.

According to one or more embodiments, the at least one hydrocarbon resin **HR** has:
- a softening point determined by using the Ring and Ball method as defined in DIN EN 1238 standard of at least 70°C, preferably at least 80°C, more preferably in the range of 70 - 180°C, preferably 80 - 170°C, more preferably 100 - 160°C and/or
- an average molecular weight (Mₙ) in the range of 250 - 7'500 g/mol, preferably 300 - 5'000 g/mol and/or
- a glass transition temperature (T_{g}) determined by dynamical mechanical analysis (DMA) as the peak of the measured loss modulus (G") curve using an applied frequency of 1 Hz and a strain level of 0.1% of at or above 0°C, preferably at or above 15°C, more preferably at or above 35°C, even more preferably at or above 55°C, still more preferably at or above 65°C, most preferably at or above 75°C.

Suitable hydrocarbon resins are commercially available, for example, under the trade name of Wingtack® series, Wingtack® Plus, Wingtack® Extra, and Wingtack® STS (all from Cray Valley); under the trade name of Escorez® 1000 series, Escorez® 2000 series, and Escorez® 5000 series (all from Exxon Mobile Chemical); under the trade name of Novares® T series, Novares® TT series, Novares® TD series, Novares® TL series, Novares® TN series, Novares® TK series, and Novares® TV series (all from RUTGERS Novares GmbH); and under the trade name of Kristalex®, Plastolyn®, Piccotex®, Piccolastic® and Endex® (all from Eastman Chemicals).

According to one or more embodiments, the at least one hydrocarbon resin HR comprises 5 - 35 wt.-%, preferably 10 - 30 wt.-%, more preferably 10 - 25 wt.-%, even more preferably 12.5 - 20 wt.-%, most preferably 15 - 18.5 wt.-% of the total weight of the acoustic damping material.

According to one or more embodiments, the at least one hydrocarbon resin **HR** is a hydrogenated hydrocarbon resin.

The acoustic damping material of the present invention further comprises at least one solid particulate filler **F.** According to one or more embodiments, the at least one solid particulate filler **F** comprises 35 - 75 wt.-%, preferably 40 - 70 wt.-%, more preferably 45 - 70 wt.-%, even more preferably 50 - 70 wt.-%, most preferably 50 - 65 wt.-% of the total weight of the acoustic damping material.

According to one or more embodiments, the at least one solid particular filler **F** is selected from the group consisting of calcium carbonate, magnesium carbonate, talc, kaolin, wollastonite, feldspar, montmorillonite, dolomite, silica, cristobalite, iron oxide, iron nickel oxide, barium ferrite, strontium ferrite, barium-strontium ferrite, hollow ceramic spheres, hollow glass spheres, hollow organic spheres, glass spheres, mica, barium sulfate, and graphite.

It may be preferable that the acoustic damping material comprises several different solid particular fillers, such as at least two different solid particulate fillers. Some of the fillers may, for example, be used for decreasing the weight of the acoustic damping material whereas other fillers are used for improving the acoustic damping properties of the material.

According to one or more embodiments, the at least one solid particulate filler **F** comprises at least one first solid particulate filler **F1**, at least one second solid particulate filler **F2**, and at least one third solid particulate filler **F3**, wherein the solid particulate fillers **F1**, **F2**, and **F3** are different from each other.

According to one or more embodiments, the at least one solid particulate filler **F** comprises:
c1) At least one first solid particulate filler **F1** having a median particle size dso in the range of 1 - 100 µm and/or a true particle density of at least 1.5 g/cm³ and/or an average particle aspect ratio of not more than 2.5, and/or
c2) At least one second solid particulate filler **F2** different from the at least one first solid particulate filler **F1** and having a median particle size dso in the range of 250 - 1'000 µm and/or a true particle density of not more than 1.0 g/cm³ and/or
c3) At least one third solid particulate filler **F3** different from the at least one first solid particulate filler **F1** and the at least one second solid particulate filler **F2** and having a median particle size dso of at least 100 µm and/or a true particle density of at least 1.5 g/cm³ and/or an average particle aspect ratio of at least 3.0.

The term "median particle size d₅₀" refers in the present disclosure to a particle size below which 50% of all particles by volume are smaller than the dso value. The term "particle size" refers in the present disclosure to the area-equivalent spherical diameter of a particle. The particle size distribution can be measured by laser diffraction according to the method as described in standard ISO 13320:2009. For determination of the particle size distribution, the particles are suspended in water (wet dispersion method). A Mastersizer 2000 device (trademark of Malvern Instruments Ltd, GB) can be used in measuring particle size distribution.

The term "aspect ratio" refers in the present disclosure to the value obtained by dividing the length of a particle, i.e. the particle's largest dimension, by the arithmetic mean of the two remaining dimensions of the same particle, i.e. the width and height/thickness. The term "average aspect ratio" refers in the present document to the arithmetic average of the individual aspect ratios of the particles within a sample or collection or a statistically significant and representative random sample drawn from such a sample or collection. The aspect ratio and average aspect ratio of the particles can be determined by using any suitable measurement technique. For example, the average aspect ratio can be determined by measuring the dimensions of individual particles using, for example, a microscope, for example a scanning electron microscope, and calculating the aspect ratio from the measured dimensions as described above.

The term "true particle density" refers in the present disclosure to the real density of the particles that make up the particulate material. In contrast the term "bulk density" refers to the mass of the particulate material in a unit volume (including voids between particles).

According to one or more embodiments, the at least one first solid particulate filler **F1** is selected from the group consisting of calcium carbonate, magnesium carbonate, talc, kaolin, wollastonite, feldspar, montmorillonite, dolomite, silica, cristobalite, iron oxide , iron nickel oxide, strontium ferrite, and synthetic organic fillers,
and/or the at least one second solid particulate filler **F2** is selected from the group consisting of hollow ceramic spheres, hollow glass spheres, hollow organic spheres, and glass spheres,
and/or the at least one third solid particulate filler **F3** is selected from the group consisting of mica, montmorillonite, slate, talc, barium sulfate, and graphite.

According to one or more embodiments, the acoustic damping material further comprises:
d) At least 0.5 wt.-%, preferably 1 - 15 wt.-%, preferably 2.5 - 10 wt.-%, more preferably 2.5 - 7.5 wt.-%, even more preferably 3.5 - 7.5 wt.-%, based on the total weight of the acoustic damping material, of at least one plasticizer **PL**, and/or
e) At least 0.5 wt.-%, preferably 1 - 15 wt.-%, preferably 2.5 - 10 wt.-%, more preferably 2.5 - 7.5 wt.-%, even more preferably 3.5 - 7.5 wt.-%, based on the total weight of the acoustic damping material, of at least one paraffin wax **PW**.

Preferred plasticizers **PL** are liquids, wherein the term "liquid" is defined as a material that flows at normal room temperature, has a pour point of less than 20°C and/or a kinematic viscosity at 25°C of 50'000 cSt or less. Preferably, the at least one plasticizer **PL** is selected from the group consisting of process oils and at 25°C liquid polyolefin resins.

According to one or more embodiments, the at least one plasticizer **PL** comprises at least one process oil **PL1** selected from the group consisting of mineral oils, synthetic oils, and vegetable oils.

The term "mineral oil" refers in the present disclosure hydrocarbon liquids of lubricating viscosity (i.e., a kinematic viscosity at 100°C of 1 cSt or more) derived from petroleum crude oil and subjected to one or more refining and/or hydroprocessing steps, such as fractionation, hydrocracking, dewaxing, isomerization, and hydrofinishing, to purify and chemically modify the components to achieve a final set of properties. In other words, the term "mineral" refers in the present disclosure to refined mineral oils, which can be also characterized as Group I-III base oils according the classification of the American Petroleum Institute (API).

Suitable mineral oils to be used as the at least one process oil **PL1** include paraffinic, naphthenic, and aromatic mineral oils. Particularly suitable mineral oils include paraffinic and naphtenic oils containing relatively low amounts of aromatic moieties, such as not more than 25 wt.-%, preferably not more than 15 wt.-%, based on the total weight of the mineral oil.

The term "synthetic oil" refers in the present disclosure to full synthetic (polyalphaolefin) oils, which are also known as Group IV base oils according to the classification of the American Petroleum Institute (API). Suitable synthetic oils are produced from liquid polyalphaolefins (PAOs) obtained by polymerizing α-olefins in the presence of a polymerization catalyst, such as a Friedel-Crafts catalyst. In general, liquid PAOs are high purity hydrocarbons with a paraffinic structure and high degree of side-chain branching. Particularly suitable synthetic oils include those obtained from so-called Gas-To-Liquids processes.

Suitable at 25°C liquid polyolefin resins **PL2** include, for example, liquid polybutene and liquid polyisobutylene (PIB). The term "liquid polybutene" refers in the present document to low molecular weight olefin oligomers comprising isobutylene and/or 1-butene and/or 2-butene.The ratio of the C₄-olefin isomers can vary by manufacturer and by grade. When the C4-olefin is exclusively 1-butene, the material is referred to as "poly-n-butene" or "PNB". The term "liquid polyisobutylene" refers in the present document to low molecular weight polyolefins and olefin oligomers of isobutylene. Particularly suitable liquid polybutenes and liquid polyisobutylenes have an average molecular weight (Mₙ) of less than 15'000 g/mol, preferably less than 5'000 g/mol, more preferably less than 3,500 g/mol.

Liquid polybutenes are commercially available, for example, under the trade name of Indopol® H- and L-series (from Ineos Oligomers), under the trade name of Infineum® C-series and Parapol® series (from Infineum), and under the trade name of PB-series (Daelim). Liquid polyisobutylenes (PIBs) are commercially available, for example, under the trade name of Glissopal® V-series (from BASF) and and under the trade name of Dynapak®-series (from Univar GmbH, Germany).

According to one or more embodiments, the at least one plasticizer **PL** consists of the at least one process oil **PL1** preferably selected from the group consisting of mineral oils, synthetic oils, and vegetable oils. According to one or more further embodiments, the at least one plasticizer **PL** consists of the at least one at 25°C liquid polyolefin **PL2**, preferably selected from the group consisting of liquid polybutene and liquid polyisobutylene (PIB).

The term "paraffin wax" refers in the present disclosure to hard, crystalline wax composed mainly of saturated paraffin hydrocarbons. The paraffin waxes are typically obtained from petroleum distillates or derived from mineral oils of the mixed-base or paraffin-base type. According to one or more embodiments, the at least one paraffin wax **PW** is a Fischer-Tropsch wax.

According to one or more embodiments, the at least one paraffin wax **PW** has a softening point determined by using the Ring and Ball method as defined in DIN EN 1238 standard in the range of 75 - 150°C, preferably 80 - 140°C, more preferably 85 - 130°C.

According to one or more embodiments, the acoustic damping material further comprises at least one blowing agent **BA**.

Suitable blowing agents **BA** to be used in the acoustic damping material include both chemical blowing agents and physical blowing agents. Chemical blowing agents are typically solids that liberate gas(es) by means of a chemical reaction, such as decomposition, when exposed to higher temperatures. Chemical blowing agents may be either inorganic or organic.

Suitable chemical blowing agents include, for example, azodicarbonamides; hydrazine derivatives such as, for example, 4,4'-oxybis(benzenesulfohydrazide), diphenylsulfone-3,3'-disulfohydrazide and trihydrazinotriazine; semicarbides such as, for example, p-toluylenesulfonyl semicarbide; tetrazoles such as, for example, 5-phenyltetrazole; benzoxazines such as, for example, isatoic anhydride; carbonates and bicarbonates such as, for example, sodium bicarbonate, ammonium carbonate, ammonium bicarbonate, and potassium bicarbonate; and carboxylic acids such as, for example, solid, hydroxy-functionalized or unsaturated dicarboxylic, tricarboxylic, tetracarboxylic, and polycarboxylic acids, such as citric acid, tartaric acid, malic acid, fumaric acid, and maleic acid.

Suitable physical blowing agents include expandable microspheres, consisting of a thermoplastic shell filled with thermally expandable fluids or gases. Examples of suitable commercially available expandable microspheres include, for example, Expancel® microspheres (from AkzoNobel).

The amount of the at least one blowing agent **BA**, if used, preferably comprises 0.1 - 5 wt.-%, preferably 0.25 - 3.5 wt.-%, more preferably 0.5 - 3 wt.-%, even more preferably 1 - 3 wt.-% of the total weight of the acoustic damping material.

The acoustic damping material may optionally contain additives, which are customary for acoustic damping materials. Examples of suitable additives include, for example, pigments, thixotropic agents, thermal stabilizers, drying agents, and flame retardants. These additives, if used at all, preferably comprise not more than 25 wt.-%, more preferably not more than 15 wt.-%, even more preferably not more than 10 wt.-%, of the total weight of the acoustic damping material.

The preferences given above for the at least one thermoplastic polymer **P**, the at least one hydrocarbon resin **HR**, the at least one solid particulate filler **F**, the at least one plasticizer **PL**, and the at least one paraffin wax **PW** apply equally for all subjects of the present invention unless stated otherwise.

Another subject of the present invention is a method for producing an acoustic damping material according to the present invention, the method comprising mixing the components a) to e) with each other at an elevated temperature, preferably at a temperature in the range of 120 - 200°C, more preferably 130 - 180°C, until a homogeneously mixed mixture is obtained.

The term "homogeneously mixed mixture" refers in the present document to compositions, in which the individual constituents are distributed substantially homogeneously in the composition. Furthermore, a homogeneously mixed mixture is preferably a multi-phase mixture. For example, a homogeneously mixed mixture of a thermoplastic polymer component and a solid particulate filler component, therefore, refers to composition in which the constituents of the solid particulate filler phase are homogeneously/uniformly distributed in the thermoplastic polymer phase. For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Any conventional type of a mixing apparatus can be used in mixing of the components a) to e) with each other. The mixing step can be conducted as a batch process using a batch-type mixer, such as a Brabender, a Banbury, a roll mixer or as a continuous process using a continuous-type mixer, such as an extruder, in particular a single- or a twin-screw extruder.

The homogeneously mixed mixture obtained from the mixing step can be subsequently cooled to a temperature of below 100°C, more preferably of below 80°C. In case an extruder apparatus is used in the mixing step, the homogeneously mixed mixture is preferably extruded through an extruder die before the cooling step. The cooled homogeneously mixed mixture is storage stable at normal storage conditions. The term "storage stable" refers in the present disclosure to materials, which can be stored at specified storage conditions for long periods of time, such as at least one month, in particular at least 3 months, without any significant changes in the application properties of the material. The "typical storage conditions" refer to temperatures of not more than 60°C, in particular not more than 50°C.

The homogeneously mixed mixture can furthermore be processed into a form of a shaped article, such as a sheet or a film by using any conventional techniques, such as extrusion, calendaring, and hot-pressing techniques. The shaping step is preferably conducted before the cooling step. According to one or more embodiments, the homogeneously mixed mixture is extruded through a flat die to form a sheet of film, which is preferably cooled between a pair of calender cooling rolls. Shaped articles having specific dimensions can be produced from the extruded sheet of film, for example, by punch or die cutting.

Another subject of the present invention is use of the acoustic damping material according to the present invention for damping of vibrations and/or noise in transportation vehicles or white goods.

Another subject of the present invention is a vibration and noise damping element (1) comprising:
i) A damping layer (2) having a first and a second surface (3, 3') and
ii) An adhesive layer (4) covering at least a portion of the first surface (3) of the damping layer (2), wherein the damping layer (2) comprises or is composed of the acoustic damping material of the present invention.

A cross-section of the vibration and noise damping element according to the present invention is shown in Fig. 1.

According to one or more embodiments, the damping layer is sheet-like element having a first and a second major surfaces defining a thickness there between and a length and width at least 5 times, preferably at least 15 times, more preferably at least 25 times greater than the thickness of the sheet-like element. The term "thickness" refers to a dimension of a sheet-like element that is measured in a plane that is substantially perpendicular to the length and width dimensions of the element. In embodiments, in which the damping layer is sheet-like element, the first and second surfaces of the damping layer correspond to the first and second major surfaces of a sheet-like element.

The damping layer and the adhesive layer are preferably directly connected to each other over their opposing surfaces. The expression "directly connected" is understood to mean in the context of the present invention that no further layer or substance is present between the two layers and that the opposing surfaces of the layers are directly adhered to each other. According to one or more embodiments, the adhesive layer covers at least 50%, preferably at least 65%, more preferably at least 75% of the first surface of the damping layer. According to one or more further embodiments, the adhesive layer covers substantially the entire area of the first surface of the damping layer. The expression "substantially entire area" is understood to mean at least 90%, preferably at least 95%, more preferably at least 98.5% of the total area.

The adhesive layer preferably comprises a pressure sensitive adhesive or a hot-melt adhesive composition. The term "pressure sensitive adhesive" is understood to include also pressure sensitive hot-melt adhesives (HM-PSA). According to one or more embodiments, the adhesive layer is composed of a pressure sensitive adhesive or of a hot-melt adhesive composition.

Suitable pressure sensitive adhesives to be used in the adhesive layer include compositions based on acrylic polymers, styrene block copolymers, amorphous polyolefins (APO), amorphous poly-α-olefins (APAO), vinyl ether polymers, or elastomers such as, for example, butyl rubber, ethylene vinyl acetate having a high content of vinyl acetate, natural rubber, nitrile rubber, silicone rubber, and ethylene-propylene-diene rubber. In addition to the above mentioned polymers, suitable pressure sensitive adhesive compositions typically comprise one or more additional constituents including, for example, tackifying resins, waxes, and plasticizers as wells as one or more additives such as, for example, UV-light absorption agents, UV- and heat stabilizers, optical brighteners, pigments, dyes, and desiccants.

Hot-melt adhesives are solvent free adhesives, which are solid at room temperature and which are applied to the substrate to be bonded in form of a melt. After cooling the adhesive solidifies and forms an adhesive bond with the substrate through physically and/or chemically occurring bonding. Suitable hot-melt adhesives include, for example, polyolefin-based hot-melt adhesives, in particular those based on amorphous polyolefins (APO) and amorphous poly-alpha-olefins (APAO), and polyurethane-based hot-melt adhesives. In addition to the above mentioned polymers, suitable hot-melt adhesive compositions typically comprise one or more additional constituents including, for example, resins and waxes as well as one or more additives such as, for example, UV-light absorption agents, UV- and heat stabilizers, optical brighteners, pigments, dyes, and desiccants. Suitable hot-melt adhesives to be used in the adhesive layer are disclosed, for example, in WO 2011/023768 A1, WO 2016/139345 A1, and WO 2017/174522 A1.

According to one or more embodiments, the at least one solid particulate filler **F** is present in the acoustic damping material in an amount of at least 45 wt.-%, preferably at least 50 wt.-%, based on the total weight of the acoustic damping material, wherein the at least one solid particulate filler **F** comprises:
c1) 25 - 55 wt.-%, preferably 30 - 50 wt.-% of at least one first solid particulate filler **F1**, preferably selected from the group consisting of calcium carbonate, magnesium carbonated, talc, kaolin, wollastonite, feldspar, montmorillonite, dolomite, silica, and cristobalite,
c2) 5 - 35 wt.-%, preferably 10 - 30 wt.-% of at least one second solid particulate filler **F2**, preferably selected from the group consisting of hollow ceramic spheres, hollow glass spheres, hollow organic spheres, and glass spheres, and
c3) 25 - 55 wt.-%, preferably 30 - 50 wt.-% of at least one third solid particulate filler **F3**, preferably selected from the group consisting of mica, montmorillonite, slate, talc, barium sulfate, graphite, all proportions being based on the total weight of the at least one solid particulate filler F.

According to one or more further embodiments, the at least one solid particulate filler **F** is present in the acoustic damping material in an amount of at least 55 wt.-%, preferably at least 60 wt.-%, based on the total weight of the acoustic damping material and the at least one solid particulate filler **F** comprises:
c1) 60 - 90 wt.-%, preferably 65 - 85 wt.-% of at least one first solid particulate filler **F1** selected from the group consisting of iron oxide, iron nickel oxide, and strontium ferrite,
c2) 2.5 - 25 wt.-%, preferably 5 - 20 wt.-% of at least one second solid particulate filler **F2** selected from the group consisting of hollow ceramic spheres, hollow glass spheres, hollow organic spheres, and glass spheres, and c3) 0 - 15 wt.-%, preferably 2.5 - 15 wt.-% of at least one third solid particulate filler **F3** selected from the group consisting of mica, montmorillonite, slate, talc, barium sulfate, graphite, all proportions being based on the total weight of the at least one solid particulate filler **F**.

According to one or more embodiments, the damping layer has a maximum thickness in the range of 0.5 - 15 mm, preferably 1 - 10 mm, more preferably 1.5 - 7.5 mm, even more preferably 1.5 - 5 mm and/or a density in the range of 1 - 5 g/cm³, preferably 1 - 4.5 g/cm³, more preferably 1 - 3 g/cm³ and/or a mass per unit area of 1 - 5 kg/m², preferably 1 - 4.5 kg/m², more preferably 1.5 - 4.5 kg/m², still more preferably 1.5 - 3.5 kg/m².

According to one or more embodiments, the vibration and noise damping element has a loss factor determined at 200 Hz at temperature of 20°C using the method as defined in ISO 6721 standard, of at least 0.1, preferably at least 0.15. Such vibration and noise damping elements have been found out to be especially suitable for use in damping of vibrations of components and structures contained in articles of automotive industry and home appliances.

According to one or more embodiments, the vibration and noise damping element further comprises, in addition to the damping layer and the adhesive layer, a constraining layer covering at least a portion of the second surface of the damping layer. The vibration and noise damping element according to these embodiments are generally known as "constrained layer dampers". The damping layer and the constraining layer are preferably directly connected to each other over their opposing surfaces, i.e. the damping layer is sandwiched between the adhesive layer and the constraining layer. According to one or more embodiments, the constraining layer covers substantially the entire area of the second surface of the damping layer. A cross-section of a vibration and noise damping element according to these embodiments is shown in Figure 2.

According to one or more embodiments, the constraining layer is a metal sheet, preferably aluminum or steel sheet or a polymeric sheets, preferably glass fiber reinforced polymer sheet. The thickness of the constraining layer is not particularly restricted but the use of constraining layers that are thinner than the damping layer is generally preferred. Preferred thickness also depends on the material of the constraining layer. According to one or more embodiments, the constraining layer has a thickness of 0.05 - 1.5 mm, preferably 0.1 - 1.25 mm, more preferably 0.1 - 1.0 mm. According to one or more embodiments, the constraining layer is a metal sheet having a thickness of 0.05 - 0.5 mm, preferably 0.05 - 0.4 mm. According to one or more further embodiments, the constraining layer is a polymeric sheet having a thickness of 0.1 - 1.2 mm, preferably 0.25 - 1.0 mm.

It is preferred that the constraining layer has an elastic modulus, which is larger than that of the damping layer, such larger by at least the factor 3, preferably at least the factor 5, more preferably at least a factor of 10, wherein the elastic modulus is measured by using the method as defined in ISO 6892-1:2016 standard (for metallic sheets) or as defined in ISO 527-2 standard (for polymeric sheets).

Another subject of the present invention is a method for producing a vibration and noise damping element of the present invention, the method comprising steps of:
i) Providing a damping layer comprising or composed of the acoustic damping material of the present invention and having a first and a second surface,
ii) Applying an adhesive composition on the first surface of the damping layer.

Step i) can be conducted any conventional techniques known to a person skilled in the art. For example, the acoustic damping material of the present invention can be first melt-processed in an extruder apparatus and then extruded though an extruder die, preferably a flat die, into a form of a damping layer. Alternatively, the acoustic damping material of the present invention can be processed into a damping layer by using calendering or hot-pressing techniques.

The adhesive composition can be applied on the surface of the damping layer using any conventional techniques, the details of which depend on the type of the adhesive composition. For example, the adhesive composition can be applied on the surface of the sheet by nozzle extrusion, powder dispersion, hot-melt calendaring, or by spray lamination techniques. In case of a hot-melt adhesive composition or a hot-melt pressure sensitive adhesive (HM-PSA) composition, the adhesive composition is first heated to an elevated application temperature above the softening point (Tₛ) of the adhesive before being applied on the surface of the damping layer.

Another subject of the present invention is a method for applying a vibration and noise damping element according to the present invention to a noise emitting surface of a substrate, the method comprising steps of:
I) Providing a vibration and noise damping element according to the present invention,
II) Contacting the outer major surface of the adhesive layer of the vibration and noise damping element with the noise emitting surface and applying sufficient pressure to form an adhesive bond or
II') Heating the adhesive layer and/or the substrate and contacting the outer major surface of the adhesive layer with the noise emitting surface and forming an adhesive bond by cooling of the adhesive layer.

The term "outer major surface" of the adhesive layer refers to the major surface of the adhesive layer on the side opposite to the side of the damping layer. The substrate having a noise emitting surface can be any type of shaped article, such as a panel, a sheet, or a film, composed, for example, of metal, plastic, or fiber reinforced plastic. The heating of the adhesive layer and/or the substrate in step II)' can be conducted using any conventional techniques, such as heating in an oven, heating by air stream, or heating with infrared (IR)-radiation.

Still another subject of the present invention is a vibration damped system comprising a substrate (6) having a noise emitting surface (7) and a vibration and noise damping element (1) according to the present invention, wherein least a portion of the first surface (3) of the damping layer (2) is adhesively bonded to the noise emitting surface (7) via the adhesive layer (4). A cross-section of a vibration damped system is shown in Figure 3.

According to one or more embodiments, the vibration and noise damping element (1) is a constrained damping element comprising a constraining layer (5), wherein the damping layer (2) is sandwiched between the adhesive layer (4) and a constraining layer (5). A cross-section of a vibration damped system according to these embodiments is shown in Figure 4.

According to one or more embodiments, the substrate having the noise emitting surface is part of a structure of an automotive vehicle or a white good.

### Examples

The followings products shown in Table 1 were used in the examples.

**Table 1**

| | |
|---|---|
| **P1** | Ethylene vinyl acetate copolymer, 5-20 % vinyl acetate content Melt Index (190 °C/2.16 kg) < 20 g/10 min (ASTM D1238) |
| **P2** | Ethylene vinyl acetate copolymer, 20-35 % vinyl acetate content, Melt Index (190 °C/2.16 kg) > 150 g/10 min (ISO 1133) |
| **P3** | Propylene-based elastomer, ethylene content 10-20 %, Melt Flow Rate (230 °C/2.16 kg) < 10 g/10 min (ASTM D1238), softening point > 50 °C (ASTM D1525) |
| **HR** | Hydrocarbon resin, R&B softening point 100-170 °C (ASTM E 28), glass transition temperature determined by DSC 70-120 °C |
| **F1** | Mineral filler, d₅₀ particle size < 50 µm |
| **F2** | Light-weight filler, true particle density < 1.0 g/cm³ |
| **F3** | Mineral filler, d₅₀ particle size > 500 µm |
| **PL** | Process oil |
| **PW** | Paraffin wax |
| **A** | Additive package containing rheology modifier, pigment, thermal stabilizer, and drying agent |

### Preparation of the damping materials

The inventive damping materials having the compositions Ex-1 to Ex-6 as shown in Table 2 were prepared according to the following procedure.

In a first step, the polymers **P1**, **P2**, and **P3**, the hydrocarbon resin **HR**, and the paraffin wax **PW** were mixed in a batch type mixer. After that, the plasticizer **PL** was added constantly over a time of 1 hour. After this, the thus obtained mixture and all the remaining components were added into a batch mixer and mixed during 20 min. The mixed compositions were then stored in sealed cartridges.

Reference examples Ref-1 and Ref-2 are commercial bitumen-based damping materials available from FAIST-ChemTec GmbH.

### Measurement of the loss factor

The previously prepared damping materials were hot-pressed into form of sheets having a thickness of ca. 2.2 mm and mass per unit area of ca. 3 kg/m². From produced sheets, test specimens having suitable dimensions were cut out by die cutting. One of the major surfaces of each test specimen was coated with a layer of pressure sensitive acrylate-based adhesive. The adhesive layer had a thickness of 50 µm.

The loss factors for the test specimen were determined by using the measurement method as defined in ISO 6721 standard. The measurements were conducted at 200 Hz anti-resonance point and at a temperature range of 20 to 60°C using a commercially available loss factor tester.

### Measurement of density

The densities of the test specimens (without the adhesive layer) were measured according to DIN EN ISO 1183 standard using a water immersion method (Archimedes principle) in deionized water and a precision balance to measure the mass of the test specimens.

### Determined properties

The damping properties of the exemplary compositions were characterized by using following parameters:
- Percentage improvement of the maximum loss factor (LFₘₐₓ) compared to a base value obtained with the exemplary composition Ex-6
- Temperature at which the maximum loss factor is measured (T @LFₘₐₓ)
- Percentage improvement of the broadness of the temperature range wherein the measured loss factor is at or above 0.1 (ΔT for LF ≥ 0.1) compared to a base value obtained with the exemplary composition Ex-6

**Table 2**

| **Compositions, [wt.-%]** | **Ex 1** | **Ex 2** | **Ex 3** | **Ex-4** | **Ex-5** | **Ex-6** | **^{b}Ref-1** | **^{c}Ref-2** |
|---|---|---|---|---|---|---|---|---|
| P1 | 1.0 | 1.0 | 1.0 | 1.0 | 1.0 | 1.0 | | |
| P2 | 2.6 | 2.5 | 2.5 | 2.5 | 2.5 | 2.4 | | |
| P3 | 3.6 | 3.5 | 3.5 | 3.5 | 3.5 | 3.4 | | |
| HR | 13.5 | 16.2 | 16.6 | 17.0 | 17.2 | 19.4 | | |
| F1 | 24.1 | 23.3 | 23.2 | 23.1 | 23.1 | 22.4 | | |
| F2 | 13.5 | 13.1 | 13.1 | 13.0 | 13.0 | 12.6 | | |
| F3 | 24.0 | 23.2 | 23.1 | 23.0 | 23.0 | 22.3 | | |
| PL | 5.7 | 5.6 | 5.5 | 5.5 | 5.5 | 5.3 | | |
| PW | 5.7 | 5.6 | 5.5 | 5.5 | 5.5 | 5.3 | | |
| ^{a}A | 6.1 | 6.0 | 5.9 | 5.9 | 5.9 | 5.7 | | |
| Total | 100.0 | 100.0 | 100.0 | 100.0 | 100.0 | 100.0 | | |

| **Measured properties** | | | | | | | | |
|---|---|---|---|---|---|---|---|---|
| Density, [g/cm³] | 1.6 | 1.3 | 1.3 | 1.4 | 1.3 | 1.2 | - | - |
| LFₘₐₓ [%] | 112.1 | 115.7 | 115.0 | 136.4 | 122.9 | 100.0 | 98.6 | 84.3 |
| T @LFmax [°C] | 0 | 10 | 20 | 20 | 20 | 30 | 20 | 20 |
| ΔT for LF >0.1 [%] | 103.3 | 118.3 | 120.0 | 143.3 | 120.0 | 100.0 | 113.3 | 80.0 |

| | | | | | | | | |
|---|---|---|---|---|---|---|---|---|
| ^{a}Rheology modifier, pigment, thermal stabilizer, and drying agent; ^{b,c}Bitumen-based commercially available damping materials | | | | | | | | |

## Claims

1. An acoustic damping material comprising:
a) At least one thermoplastic polymer **P**,
b) At least one hydrocarbon resin **HR**,
c) At least one solid particulate filler **F**,
d) Optionally at least one plasticizer **PL**, and
e) Optionally at least one paraffin wax **PW**, wherein the at least one solid particulate filler **F** comprises at least 35 wt.-%, preferably at least 40 wt.-% of the total weight of the acoustic damping material.

2. The acoustic damping material according to claim 1, wherein the acoustic damping material is essentially free of bitumen.

3. The acoustic damping material according to claim 1 or 2, wherein the sum of the amounts of components a) + b) + d) + e) comprises 15 - 65 wt.-%, preferably 20 - 60 wt.-% of the total weight of the acoustic damping material.

4. The acoustic damping material according to any one of previous claims, wherein the at least one thermoplastic polymer **P** comprises not more than 25 wt.-%, preferably 1.5 - 20 wt.-%, more preferably 3 - 15 wt.-% of the total weight of the acoustic damping material.

5. The acoustic damping material according to any one of previous claims, wherein the at least one thermoplastic polymer **P** comprises:
a1) At least one hard thermoplastic polymer **P1** having a melt flow index (MFI) determined according to ISO 1133 (190°C/2.16 kg) of not more than 50 g/10 min, preferably not more than 25 g/10 min and/or
a2) At least one soft thermoplastic polymer **P2** having a melt flow index (MFI) determined according to ISO 1133 (190°C/2.16 kg) of at least 75 g/10 min, preferably at least 100 g/10 min.

6. The acoustic damping material according to claim 5, wherein the at least one thermoplastic polymer **P** further comprises:
a3) At least one polyolefin **P3**, wherein the at least one polyolefin **P3** is preferably not entirely miscible with the at least one hard thermoplastic polymer **P1** and/or with the at least one soft thermoplastic polymer **P2**.

7. The acoustic damping material according to claim 5 or 6, wherein the at least one hard thermoplastic polymer **P1** is an ethylene vinyl acetate copolymer having a content of a structural unit derived from vinyl acetate of not more than 20 wt.-%, preferably not more than 15 wt.-%, based on the total weight of the copolymer and/or the at least one soft thermoplastic polymer **P2** is an ethylene vinyl acetate copolymer having a content of a structural unit derived from vinyl acetate of at least 15 wt.-%, preferably at least 20 wt.-%, based on the total weight of the copolymer.

8. The acoustic damping material according to claim 6 or 7, wherein the at least one polyolefin **P3** comprises at least one propylene-based elastomer **P31**, wherein the at least one propylene-based elastomer **P31** is preferably a copolymer of propylene and ethylene comprising 80 - 90 wt.-% of propylene-derived units, based on the total weight of the propylene-based elastomer and 9 - 18 wt.-% of ethylene-derived units based on the total weight of the propylene-based elastomer.

9. The acoustic damping material according to any one of previous claims, wherein the at least one hydrocarbon resin **HR** has a softening point determined by using the Ring and Ball method as defined in DIN EN 1238 standard of at least 70°C, preferably of at least 80°C and/or an average molecular weight (Mₙ) in the range of 250 - 7'500 g/mol, preferably 300 - 5'000 g/mol and/or a glass transition temperature (T_{g}) determined by dynamical mechanical analysis (DMA) as the peak of the measured loss modulus (G") curve using an applied frequency of 1 Hz and a strain level of 0.1% of at or above 0°C, preferably at or above 15°C.

10. The acoustic damping material according to any one of previous claims, wherein the at least one hydrocarbon resin **HR** comprises 5 - 35 wt.-%, preferably 10 - 30 wt.-% of the total weight of the acoustic damping material and/or wherein the at least one solid particulate filler **F** comprises 35 - 75 wt.-%, preferably 40 - 70 wt.-% of the total weight of the acoustic damping material.

11. The acoustic damping material according to any one of previous claims, wherein the at least one solid particulate filler **F** is selected from the group consisting of calcium carbonate, magnesium carbonate, talc, kaolin, wollastonite, feldspar, montmorillonite, dolomite, silica, cristobalite, iron oxide, iron nickel oxide, barium ferrite, strontium ferrite, barium-strontium ferrite, hollow ceramic spheres, hollow glass spheres, hollow organic spheres, glass spheres, mica, barium sulfate, and graphite.

12. The acoustic damping material according to any one of previous claims, wherein the at least one solid particulate filler **F** comprises at least one first solid particulate filler **F1**, at least one second solid particulate filler **F2**, and at least one third solid particulate filler **F3**, wherein said solid particulate fillers **F1**, **F2**, and **F3** are different from each other.

13. The acoustic damping material according to any one of previous claims comprising:
d) At least 0.5 wt.-%, preferably 1 - 15 wt.-%, more preferably 2.5 - 10 wt.-%, based on the total weight of the acoustic damping material, of the at least one plasticizer **PL** and/or
e) At least 0.5 wt.-%, preferably 1 - 15 wt.-%, more preferably 2.5 - 10 wt.-%, based on the total weight of the acoustic damping material, of the at least one paraffin wax **PW**.

14. Use of the acoustic damping material according to any one of claims 1-13 for damping of vibrations and/or noise in transportation vehicles or white goods.

15. A vibration and noise damping element (1) comprising:
i) A damping layer (2) having a first surface (3) and a second surface (3') and
ii) An adhesive layer (4) covering at least a portion of the first surface (3) of the damping layer (2), wherein the damping layer (2) comprises or is composed of the acoustic damping material according to any one of claims 1 - 13.

16. The vibration and noise damping element (1) according to claim 15, wherein the damping layer (2) has a thickness of 1 - 10 mm, preferably 1.5 - 7.5 mm and/or mass per unit area of 1 - 5 kg/m², preferably 1 - 4.5 kg/m².

17. A method for applying a vibration and noise damping element (1) according to claim 15 or 16 to a noise emitting surface (7) of a substrate (6), the method comprising steps of:
I) Providing the vibration and noise damping element (1) according to claim 15 or 16,
II) Contacting the outer major surface of the adhesive layer (4) of said vibration and noise damping element (1) with the noise emitting surface (7) and applying sufficient pressure to form an adhesive bond or
II') Heating the adhesive layer (4) and/or the substrate (6) and contacting the outer major surface of the adhesive layer (4) with the noise emitting surface (7) and forming an adhesive bond by cooling of the adhesive layer (4).

18. A vibration damped system comprising a substrate (6) having a noise emitting surface (7) and a vibration and noise damping element (1) according to claim 15 or 16, wherein least a portion of the first surface (3) of the damping layer (2) is adhesively bonded to the noise emitting surface (7) via the adhesive layer (4), wherein said substrate (6) having the noise emitting surface (7) is preferably part of a structure of an automotive vehicle or a white good.
